Europäisches Patentamt

European Patent Office

Office européen des brevets

(19)

(11) Publication number: **0 196 690**
**B1**

# EUROPEAN PATENT SPECIFICATION

(12)

(45) Date of publication of patent specification: **18.10.89**

(51) Int. Cl.⁴: **F 03 B 17/02**

(21) Application number: **86200305.0**

(22) Date of filing: **27.02.86**

(54) **Energy storage and recovery.**

(30) Priority: **28.03.85 NL 8500911**

(43) Date of publication of application:
**08.10.86 Bulletin 86/41**

(45) Publication of the grant of the patent:
**18.10.89 Bulletin 89/42**

(84) Designated Contracting States:
**AT DE FR GB NL SE**

(56) References cited:
**DE-C- 215 657**
**FR-A- 693 731**
**FR-A-1 006 464**
**US-A-4 086 765**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Verschuur, Eke
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

## Description

The invention relates to a system for the storage and recovery of energy comprising a first storage space partly filled with liquid, a second storage space which is partly filled with gas, the lower part of the first storage space being liquid-connected to the lower part of the second storage space and wherein a pump is situated at approximately the same height as, or above, the first storage space, and is provided with means for interrupting the flow of liquid, in order, during normal operation, to be able to pump liquid from the first storage space to the second storage space resulting in the gas being compressed, or to be driven by liquid displaced from the second storage space by the expanding gas to flow back to the first storage space.

Such a system is known from FR—A—1,006,464.

However, FR—A—1,006,464 only relates to an overground installation for producing electric energy by means of wind or the pressure of flowing water and cannot be used for underground energy storage by means of compression and expansion of a gas cushion or gas spring in an underground space or cavern.

It is therefore an object of the invention to provide a system for the storage and recovery of energy which can be used in caverns or underground storage spaces.

It is another object of the invention to provide a method for the storage and recovery of energy with the aid of such a system. The system of the invention therefore is characterized in that the said system comprises a pump/turbine unit which is in liquid connection in the line between the first storage space and the second storage space, and wherein the second storage space is an underground space or cavern.

In an advantageous embodiment, the first storage space can also contain gas that forms a gas cushion above the liquid.

In another advantageous embodiment, the second storage space is situated below the first storage space. The second storage space can be an underground space, which can be formed in any hard rock. A particularly suitable rock is rock salt. This has the advantage that the underground space can be formed by dissolving the salt.

In the case of very large volumes, it may be more advantageous if the first storage space is also an underground space. In that case, it is favourable to form both underground storage spaces in rock salt.

It can be remarked that it is already generally known to apply a system wherein the first storage space consists of a lake at a high location and the second storage space consists of a second lake at a lower location or of an underground cavern, and there is a connecting line between the lower part of the first storage space and the lower part of the second storage space. Moreover, in this known system the pump/turbine unit is installed in the connecting line and located at the same height as the lower, second space in order, during normal operation, to be able to pump a liquid from the second storage space to the higher, first storage space, or to be driven by the liquid flowing back from the higher, first storage space to the lower, second storage space.

The pump of such a system is usually driven by an electric motor connected by an electric line to an electric network, and the turbine then drives an electric generator which is also connected to an electric line to an electric network. Such a system enables an excess of electrical energy to be used to pump the liquid to the higher, first storage space, while a shortage of electrical energy can be supplemented by electrical energy generated by the electric generator driven by the turbine, which is itself driven by liquid flowing back to the lower, second storage space.

Since the pump/turbine unit is installed near the lower, second storage space, it is necessary in the case of the second storage space being an underground cavern, in addition to this storage space to make a separate space for the pump/turbine unit and to make a separate shaft through which to run an electric line os sufficient size to carry the electrical energy to the electric motor and from the electric generator. This makes such a system extremely costly.

The invention also relates to a process for the storage and recovery of energy with the aid of the system according to the invention, characterized by the steps of:

a) pumping liquid from the first storage space to the second storage space, which is partly filled with gas, with the aid of the pump/turbine unit, resulting in the gas being compressed;

b) interrupting the pumping of the liquid;

c) allowing liquid displaced from out of the second storage space by the expanding gas to flow back to the first storage space;

d) letting the returning liquid drive the pump/turbine unit; and

e) interrupting the return flow of the liquid.

It will be appreciated that the words "pump" and "turbine" used in the specification and the claims also refer to a "compressor" and an "expander" respectively.

By way of example, the invention will now be discussed in more detail with reference to the figures, in which:

Figure 1 shows schematically a partial cross-section of the system; and

Figure 2 shows schematically a detail of the system with a different configuration of the second storage space.

The system for storing and recovering energy comprises a first underground storage space 1 formed in a salt dome 2 situated beneath an earth layer 3, and a second underground storage space 5 situated on the salt dome 2 below the first storage space 1.

The system further comprises a pump/turbine unit 8 located at ground level 7 shows the first storage space 1, the pump/turbine unit consisting of a pump 9 connected by a shaft 10 to an electric motor 13, and a turbine 14 connected by a shaft 15 to an electric generator 16.

The pump/turbine unit 8 is connected to the lower part of the first storage space 1 by a first line 17, and to the lower part of the second storage space 5 by a second line 18. The first line 17 comprises a bore-hole provided with a tube 19, and the second line 18 comprises a bore-hole provided with a tube 20.

The electric motor 13 is connected by an electric line (not shown) to en electric network (not shown) in order to draw electrical energy from it, and the electric generator 16 is connected by an electric line (not shown) to the electric network in order to supply electrical energy to it.

The first storage space 1 is partly filled with a liquid, viz. brine 22 having a density of 1200 kg/$m^3$, and the second storage space 5 is partly filled with a gas, viz. nitrogen, that serves as a gas cushion. The liquid is also to be found in the first line 17, the pump/turbine unit 8, the second line 18 and the lower part of the second storage space 5; and the gas is also to be found in the upper part of the first storage space 1 as a gas cushion above the liquid 22. The numeral 24 refers to the interface between the two fluids in the first storage space 1 and the numeral 25 to the interface between the two fluids in the second storage space 5.

The inlet of the pump 9 is connected to the first line 17 by means of a supply pipe 26 provided with a shut-off valve 27, and the outlet of the pump 9 is connected to the second line 18 by a discharge pipe 28 provided with a shut-off valve 29.

The inlet of the turbine 14 is connected to the second line 18 by means of a supply pipe 30 provided with a shut-off valve 31, and the outlet of the turbine 14 is connected to the first line 17 by a discharge pipe 32 provided with a shut-off valve 33.

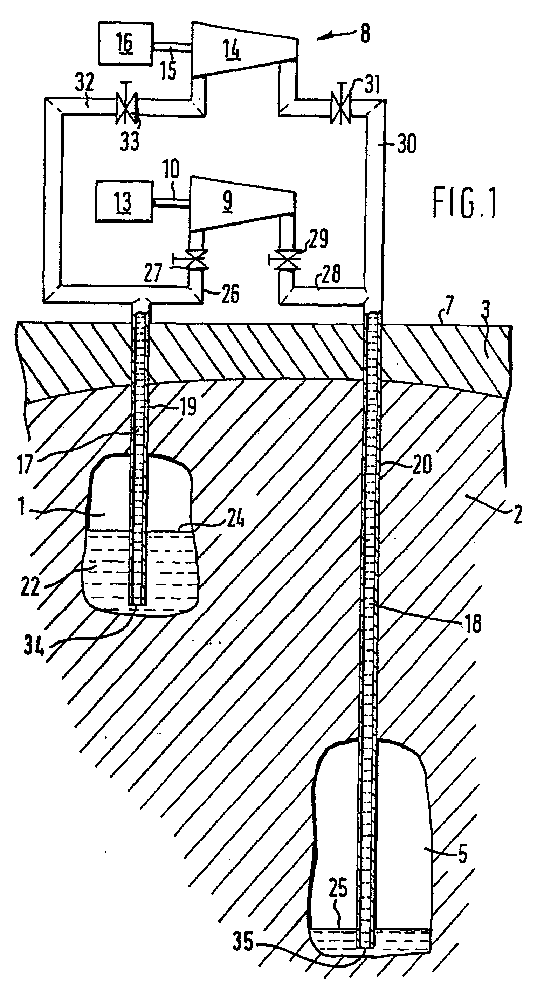

In the stationary situation shown in Figure 1, the shut-off valves 27, 29, 31 and 33 are closed.

If there is an excess of electrical energy, this is fed to the electric motor 13 to drive the pump 9, and the shut-off valves 27 and 29 are opened so that the liquid is pumped from the first storage space 1 to the lower part of the second storage space 5 via the first line 17, the pump 9 and the second line 18. This results in the gas above the liquid in the second storage space 5 being compressed and the liquid pressure in the supply line 30 of the turbine 14 increasing downstream from the closed shut-off valve 31.

When the gas in the second storage space 5 is compressed to such an extent that the liquid pressure in the supply pipe 30 is sufficiently high, the pumping of the liquid will be interrupted by stopping the pump 9 and closing the shut-off valves 27 and 29. Precautions must be taken to ensure that the interface 24 in the first storage space 1 cannot fall to below the level of the opening 34 of the first line 17, so that no gas can flow into the first line 17.

When it is necessary to recover the stored energy, for example in the case of a large demand for electrical energy, just the shut-off valves 31 and 33 will be opened. Liquid, driven by the expanding gas, will then flow back from the second storage space 5 to the first storage space 1 via the second line 18, the turbine 14 and the first line 17. The returning liquid causes the turbine 14 to move, which drives the electric generator 16, and this in turn generates electrical energy which can be fed into the electric network.

When the gas in the second storage space 5 has expanded sufficiently, the return flow of the liquid is interrupted by closing the shut-off valves 31 and 33. The system will then again be in its stationary situation. When interrupting the return flow of the liquid, the gas pressure in the first storage space 1 and the height of the liquid column in the first line 17 must be chosen such that the liquid pressure in the supply line 26 near the shut-off valve 27 remains slightly above atmospheric pressure, so that when liquid is pumped out of the first storage space 1, the supply of liquid to the pump remains assured. Precautions must also be taken to ensure that the interface 25 in the second storage space 5 cannot fall to below the level of the opening 35 of the second line 18, so that no gas can flow into the second line 18.

It is subsequently possible to repeat the process of storing energy and then recovering it according to the above-described process.

In the system described above, the pump and turbine are separate, but the pump/turbine unit can also consist of a hydraulic machine which can function both as pump (or compressor) and as turbine, which hydraulic machine is connected to an electric machine which can function both as motor and generator.

To prevent the liquid from getting too hot during the operation of the system, this can be provided with a heat exchanger (not shown) to cool the liquid.

The first storage space can also be situated at ground level, for example in the form of an above-ground storage tank or a lake. In that case, the above-ground pump/turbine unit will be at about the same height as the first storage space. It will then not be necessary to have a gas cushion above the liquid in the first storage space.

The gas may consist of carbon dioxide, nitrogen or methane.

The liquid may also be oil or liquefied petroleum gas. Water can also be used, in particular if the underground part of the system is formed in a rock which is not affected by water.

A suitable system for storing and recovering 100 MW of electrical power has underground storage spaces able to contain about $5 \times 10^5$ m$^3$ to $6 \times 10^5$ m$^3$ of liquid and in which the second storage space can contain about $2 \times 10^6$ m$^3$ of gas und is situated at a depth of about 1500 m. In order to reduce hydraulic losses, the areas of the passages of the first and second lines should be as large as possible, at least 1.8 m$^2$. In such a system the highest gas pressure in the storage space will be chosen between about 1.3 times the formation pressure at the storage space (being the sum over all earth layers above the storage space of the product of the thickness and the specific mass of each of the earth layers multiplied by the acceleration of gravity) and a pressure equal to about half of the formation pressure. For a lower storage space, situated at a depth of 1500 m, the highest gas pressure can be chosen between 40 MPa and 15 MPa, and for an upper storage space, situated at a dpeth of 500 m, between 12 MPa and 6 MPa. During normal operation, the gas pressure will vary between this highest gas pressure and a pressure which is 10—20% lower. This pressure difference is chosen such that only a small amount of heat is released by the compression of the gas.

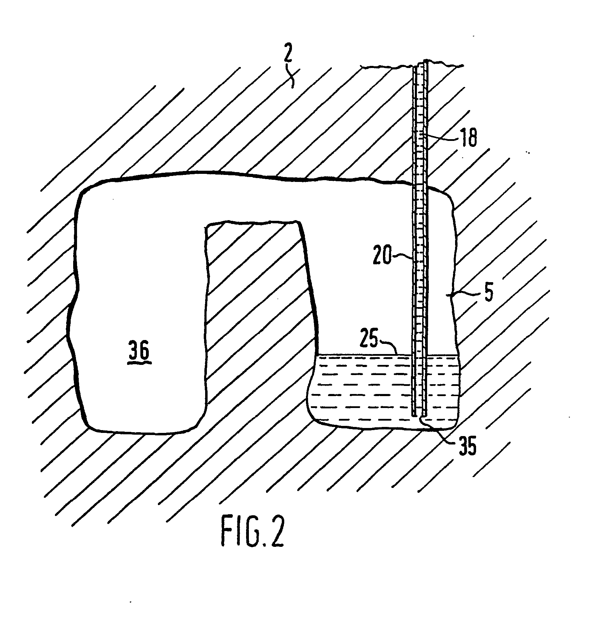

In order to be able to store the very large volume of gas, an additional gas storage space 36 (see Figure 2) is provided near the second storage space 5. The top of the additional gas storage space 36 is in open communication with the top of the second storage space 5. When, during the operation of the system, liquid is pumped from the first average space to the second storage space 5, the gas in the second storage space 5, above the interface 25, and the gas in the additional gas storage space 36, is compressed. When the liquid is able to flow back, the gas in these spaces will expand.

Instead of an electric motor 13 to drive the pump 9, the system can also comprise a turbine (not shown) to drive the pump 9. The turbine is itself driven be a compressed gas, for example natural gas.

## Claims

1. A system for the storage and recovery of energy comprising a first storage space partly filled with liquid, a second storage space which is partly filled with gas, the lower part of the first storage space being liquid-connected to the lower part of the second storage space and wherein a pump is situated at approximately the same height as, or above, the first storage space, and is provided with means for interrupting the flow of liquid, in order, during normal operation, to be able to pump liquid from the first storage space to the second storage space resulting in the gas being compressed, or to be driven by liquid displaced from the second storage space by the expanding gas to flow back to the first storage space, characterized in that the said sysatem comprises a pump/turbine unit which is in liquid connection in the line between the first storage space and the second storage space, and wherein the second storage space is an underground space or cavern.

2. The system as claimed in claim 1, characterized in that the first storage space also contains gas above the liquid present in the storage space.

3. The system as claimed in claim 1 or 2, characterized in that the second storage space is situated below the first storage space.

4. The system as claimed in any one of claims 1—3, characterized in that the first storage space is an underground space.

5. The system as claimed in any one of claims 1—4, characterized in that an additional gas storage space is provided near the second storage space, the top of the additional storage space being in open communication with the top of the second storage space.

6. The system as claimed in claim 4 or 5, characterized in that the pump/turbine unit is located at or near ground level.

7. The system as claimed in any one of claims 1—6, characterized in that the gas consists of carbon dioxide, nitrogen or methane.

8. The system as claimed in any one of claims 1—7, characterized in that the liquid consists of oil, water, brine or liquefied petroleum gas.

9. A method for the storage and recovery of energy with the aid of the system as claimed in any one of claims 1—8, characterized by the steps of:
a) pumping liquid from the first storage space to the second storage space, which is partly filled with gas, with the aid of the pump/turbine unit, resulting in the gas being compressed;
b) interrupting the pumping of the liquid;
c) allowing liquid displacement from out of the second storage space by the expanding gas to flow back to the first storage space;
d) letting the returning liquid drive the pump/turbine unit; and
e) interrupting the return flow of the liquid.

## Patentansprüche

1. System zur Speicherung und Rückgewinnung von Energie, umfassend einen ersten Speicherraum, der teilweise mit Flüssigkeit gefüllt ist, einen zweiten Speicherraum, der teilweise mit Gas gefüllt ist, wobei der untere Teil des ersten Speicherraumes in Flüssigkeitsverbindung mit dem unteren Teil des zweiten Speicherraumes steht und worin eine Pumpe auf ungefähr der gleichen Hohe wie der erste Speicherraum oder darüber angeordnet ist und mit Mitteln zum Unterbrechen der Strömung von Flüssigkeit ausgerüstet ist, damit bei Normalbetrieb Flüssigkeit aus dem ersten Speicherraum zum zweiten Speicherraum gepumpt werden kann, wodurch das Gas komprimiert wird, oder damit sie durch Flüssigkeit, die aus dem zweiten Speicherraum durch das expandierende Gas verdrängt und zum Zurückströmen zum ersten Speicherraum gebracht wird, angetrieben wird, dadurch gekennzeichnet, daß das genannte System eine Pumpen/Turbinen-Einheit umfaßt, die in Flüssigverbindung in der Leitung zwischen dem ersten Speicherraum und dem zweiten Speicherraum steht, und worin der zweite Speicherraum ein unterirdischer Hohlraum oder eine unterirdische Kaverne ist.

2. System nach Anspruch 1, dadurch gekennzeichnet, daß der erste Speicherraum auch ein über der Flüssigkeit im ersten Speicherraum vorliegendes Gas enthält.

3. System nach Anspruch 1 oder 2, dadurch gekennzeichnet, daß der zweite Speicherraum unterhalb des ersten Speicherraumes angeordnet ist.

4. System nach einem der Ansprüche 1 bis 3, dadurch gekennzeichnet, daß der erste Speicherraum ein unterirdischer Raum ist.

5. System nach einem der Ansprüche 1 bis 4, dadurch gekennzeichnet, daß nahe sum zweiten Speicherraum ein zusätzlicher Gasspeicherraum vorgesehen ist, wobei der Oberteil des zusätzlichen Speicherraumes in offener Verbindung mit dem Oberteil des zweiten Speicherraums steht.

6. System nach Anspruch 4 oder 5, dadurch gekennzeichnet, daß die Pumpen/Turbinen-Einheit auf oder nahe dem Bodenniveau angeordnet ist.

7. System nach einem der Ansprüche 1 bis 6, dadurch gekennzeichnet, daß das Gas aus Kohlendioxid, Stickstoff oder Methan besteht.

8. System nach einem der Ansprüche 1 bis 7, dadurch gekennzeichnet, daß die Flüssigkeit aus Öl, Wasser, Salzsole oder verflüssigtem Erdgas besteht.

9. Verfahren zur Speicherung und Rückgewinnung von Energie mit Hilfe des Systems, wie in einem der Ansprüche 1 bis 8 beansprucht, gekennzeichnet durch die Stufen:

a) Pumpen von Flüssigkeit aus dem ersten Speicherraum zum zweiten Speicherraum, der zum Teil mit gas gefüllt ist, mit Hilfe der Pumpen/Turbinen-Einheit, wodurch das Gas komprimiert wird;

b) Unterbrechen des Pumpens der Flüssigkeit;

c) Zurückströmenlassen von Flüssigkeit, die aus dem zweiten Speicherraum durch das expandierende Gas verdrängt wird, zum ersten Speicherraum;

d) Antreiben der Pumpen/Turbinen-Einheit mit der zurückströmenden Flüssigkeit;

e) Abbrechen des Zurückströmens der Flüssigkeit.

**Revendications**

1. Système de stockage et de récupération d'énergie comprenant un premier espace de stockage partiellement rempli d'un liquide, un second espace de stockage qui est partiellement rempli d'un gaz, la partie inférieure du premier espace de stockage étant raccordée par voie liquide à la partie inférieure du second espace de stockage et dans lequel une pompe est située environ à la même hauteur, ou plus haut, que le premier espace de stockage et est munie d'un dispositif d'interruption de l'écoulement du liquide dans le but, au cours du fonctionnement normal, de permettre de pomper le liquide depuis le premier espace de stockage vers le second espace de stockage pour conduire à la compression du gaz ou d'être entraînée par le liquide déplacé du second espace de stockage par le gaz se dilatant pour retourner vers le premier espace de stockage, caractérisé en ce que ledit système comprend une unité pompe/turbine qui est en raccordement liquide dans la canalisation entre le premier espace de stockage et le second espace de stockage, et dans lequel le second espace de stockage est un espace souterrain ou une caverne.

2. Système selon la revendication 1, caractérisé en ce que le premier espace de stockage contient aussi un gaz au-dessus du liquide présent dans l'espace de stockage.

3. Système selon la revendication 1 ou 2, caractérisé en ce que le second espace de stockage est situé plus bas que le premier espace de stockage.

4. Système selon l'une quelconque des revendications 1 à 3, caractérisé en ce que le premier espace de stockage est un espace souterrain.

5. Système selon l'une quelconque des revendications 1 à 4, caractérisé en ce qu'un espace de stockage supplémentaire de gaz est prévu au voisinage du second espace de stockage, le sommet de l'espace de stockage supplémentaire étant en communication ouverte avec le sommet du second espace de stockage.

6. Système selon la revendication 4 ou 5, caractérisé en ce que l'unité pompe/turbine est située au niveau du sol ou au voisinage du niveau du sol.

7. Système selon l'une quelconque des revendications 1 à 6, caractérisé en ce que le gaz est constitué par du gaz carbonique, de l'azote ou du méthane.

8. Système selon l'une quelconque des revendications 1 à 7, caractérisé en ce que le liquide est constitué par de l'huile, de l'eau, de la saumure ou du gaz de pétrole liquéfié.

9. Procédé de stockage et de récupération d'énergie à l'aide du système selon l'une quelconque des revendications 1 à 8, caractérisé par les étapes qui consistent à

a) pomper le liquide depuis le premier espace de stockage vers le second espace de stockage, qui est partiellement rempli de gaz, à l'aide de l'unité pompe/turbine, ce qui se traduit par la compression du gaz;

b) interrompre le pompage du liquide;

c) permettre au liquide déplacé vers l'extérieur du second espace de stockage par le gaz se dilatant de retourner dans le premier espace de stockage;

d) laisser le liquide renvoyé entraîner l'unité pompe/turbine; et

e) interrompre l'écoulement de retour du liquide.

EP 0 196 690 B1

FIG.1

FIG.2